Europäisches Patentamt

European Patent Office

Office européen des brevets

(11) Publication number: **0 511 766 A2**

# EUROPEAN PATENT APPLICATION

(21) Application number: **92303522.4**

(22) Date of filing: **21.04.92**

(51) Int. Cl.5: **A01D 34/68**, A01D 34/70

(30) Priority: **27.04.91 GB 9109131**

(43) Date of publication of application:
**04.11.92 Bulletin 92/45**

(84) Designated Contracting States:
**DE FR GB IT SE**

(71) Applicant: **Black & Decker Inc.**
**Drummond Plaza Office Park 1423 Kirkwood Highway**
**Newark Delaware 19711(US)**

(72) Inventor: **Webster, Craig Duncan**
**Flat 3, 13 Eslington Terrace**
**Jesmond, Newcastle upon Tyne(GB)**

(74) Representative: **Stagg, Diana Christine et al**
**Emhart Patents Department Lyn House 39 The Parade**
**Oadby Leicester LE2 5BB(GB)**

(54) **Lawn mower.**

(57) A lawn mower (2) of the type which collects grass cuttings, comprises means (38,42) for directing a high velocity air stream towards the ground where there is debris to be collected, and duct or baffle means for deflecting said air stream into a grass collecting means (50). The lawn mower (2) may optionally further comprise means for sucking up the air together with entrained grass cuttings. The lawn mower (2) is preferably of the hover or wheeled rotary type.

Fig_1

This invention relates to a lawn mower and is particularly concerned with a lawn mower of the type which comprises a motor-driven blade rotatable about a substantially vertical axis. Lawn mowers of this type include both mowers which are supported on wheels, known as "wheeled rotary mowers", and those which in operation are supported on a cushion of air, known as "hover" mowers.

The first rotary and hover mowers left the cut grass, normally in a finely divided state, on the ground. Users could then either leave the cut grass on the ground, for example as a mulch, or they could pick the cut grass up in a secondary operation. In due course attempts were made to design mowers of the rotary or hover type which picked the grass up as they went along.

Examples of such mowers of the hover type are described in Patent Specifications GB-A-2017475 and EP-B-0037871. In the construction described in the former, cut grass is blown by the air forming the air cushion through an outlet in the hood surrounding the cutting blade and into a grass collecting container attached to the rear of the mower. The efficient operation of this mower requires a specially shaped hood. In the construction disclosed in Specification EP-B-0037871, the cut grass is effectively sucked up by the air stream which then forms the air cushion on which the mower hovers. Thus, the air stream to the fan wheel forming the hover air cushion, before reaching the fan wheel, is used to pick up cut grass and transport it into a grass collecting chamber in the mower.

A disadvantage of the former type of grass-collecting mower, i.e. that which uses the hover air to blow cut grass into the grass bag, is that the hovering efficiency is very much reduced. A disadvantage of the latter type of mower, i.e. that which uses the air forming the air cushion to suck up cut grass, is that as the grass collecting chamber fills up, it becomes heavier and the filter tends to become blocked. Thus air is prevented from reaching the fan, and the cushion of air cannot be maintained at a level which will enable effective grass cutting.

It is an object of the present invention to provide a lawn mower of the type which collects grass cuttings, in which the above disadvantages are reduced or substantially obviated.

The present invention provides a lawn mower of the type which collects grass cuttings, characterised in that the lawn mower comprises means for directing a high velocity air stream towards the ground where there is debris to be collected, and duct or baffle means for deflecting said air stream into a grass collecting means, and, optionally, means for sucking up this air together with entrained grass cuttings.

A lawn mower according to the invention may be of the "wheeled rotary" or "hover" type. Where the mower is of the "wheeled rotary" type, it is necessary to provide specifically means for directing the high velocity air stream towards the ground; this means may suitably comprise a fan mounted on an upward extension of the output shaft of the motor used to drive the cutting blade, and may be used both to produce the high velocity air stream and optionally to suck up the air together with entrained grass cuttings.

Where the mower is of the "hover" type, the high velocity air stream and the optional suction effect may be produced by the same fan which produces the air stream to form the hover air cushion. However, a second fan is preferably provided, mounted on an upward extension of the output shaft of the motor used to drive the cutting blade and a fan which produces the air stream to form the hover air cushion.

Two embodiments of lawn mowers according to the invention will now be further described with reference to the accompanying drawings, in which

Figure 1 is a longitudinal sectional view through a first embodiment of a lawn mower;

Figure 2 is a plan view of the embodiment at Figure 2;

Figure 3 is a rear view, partially in section of the embodiment of Figures 1 and 2;

Figure 4 is a longitudinal sectional view through a second embodiment of a lawn mower;

Figure 5 is a plan view of the embodiment of Figure 4 and

Figure 6 is a rear view, partially in section, of the embodiment of Figures 4 and 5.

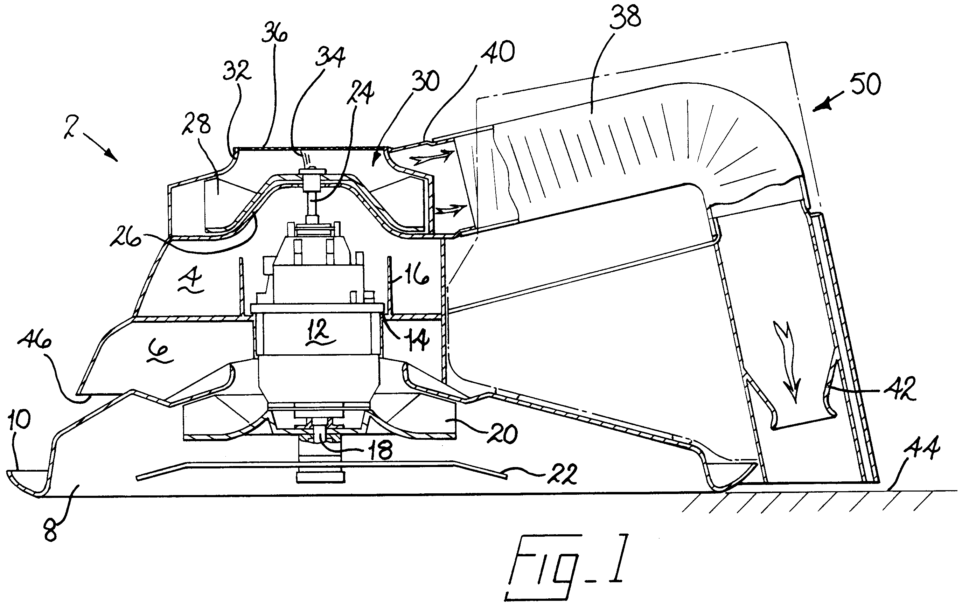

As can be seen from Figure 1, a lawn mower of the hover type shown generally at 2 comprises a body 4, suitably injection moulded from a thermoplastics material, the body comprising a housing 6 mounted on an outwardly directed hood 8 terminating in an upwardly-directed peripheral rim 10. An electric motor 12 is seated on an annular flange 14 of a stepped collar 16 attached to the inside wall of housing 6.

Extending from the lower end of motor 12 is an output shaft 18 on which is mounted a fan 20 and a cutting blade 22. The upper end 24 of output shaft 18 extends upwardly from the upper end of motor 12 and penetrates a barrier wall 26 mounted at the upper end of housing 6, and thereabove mounts a second fan 28.

Fan 28 is contained in a chamber 30 formed by the barrier wall 26 and an apertured cover 32. Cover 32 has a central opening 34 covered by a wire mesh or other air-permeable material 36. A flexible pipe 38 is attached to an outlet 40 of the chamber 30 and terminates in an outer nozzle 42 directed towards the ground at 44.

Housing 6 is provided with air inlets 46 and 48. A grass collection box 50 is provided to collect grass cuttings and comprises an opening 52 open to the ground at 44 and separated from the outlet nozzle 42 of the pipe 38 by means of a baffle 54.

In operation, the fans 20 and 28 produce separate air streams, that produced by fan 20 providing the air cushion on which the mower hovers, and that provided by fan 28 providing a high velocity air stream along the pipe 38, and out through the nozzle 42. High velocity air directed towards the ground at 44 causes turbulence in grass cuttings lying on the ground, lifting these cuttings through the opening 52 and upwards into the grass collecting box 50.

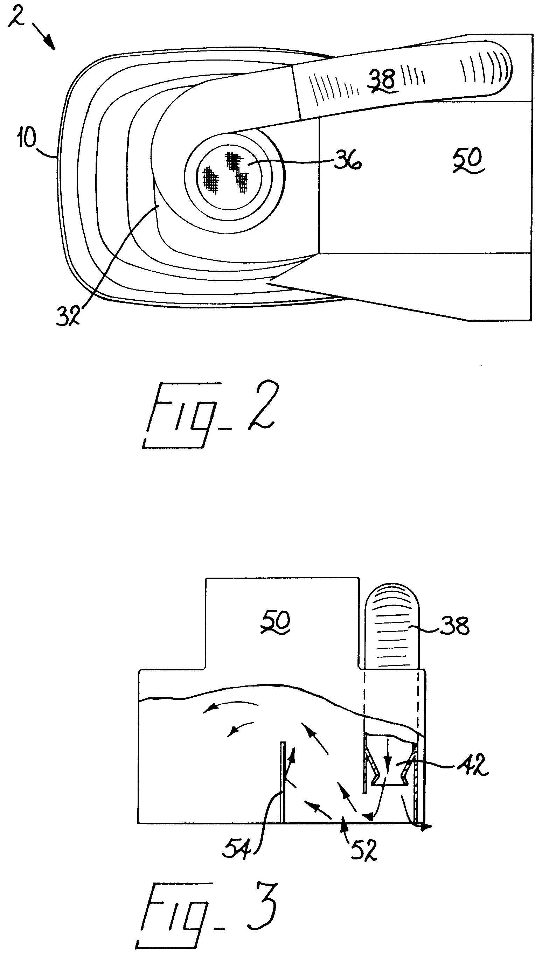

Arrows on Figure 3 show the direction of air flow within the mower, showing some leakage of air underneath the mower.

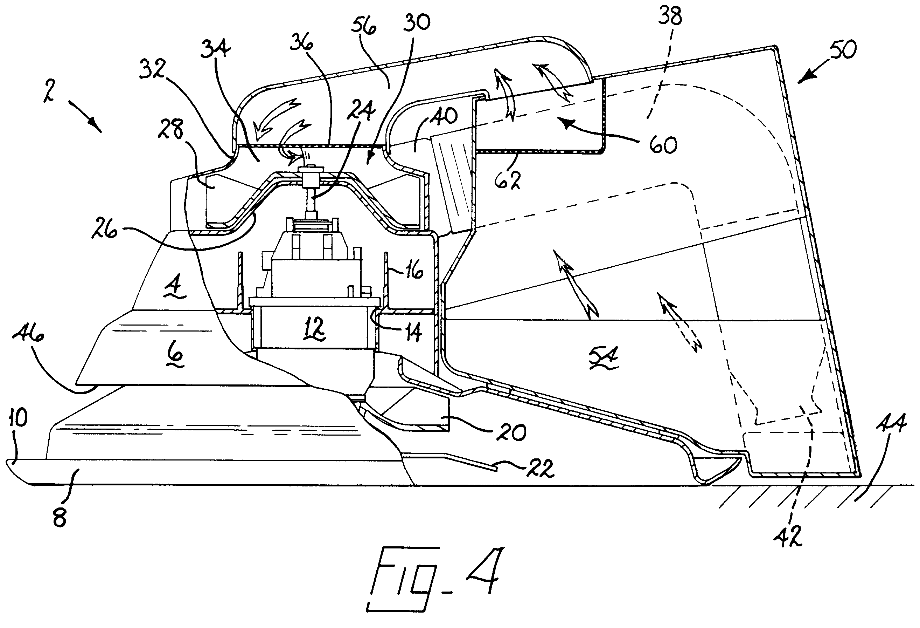

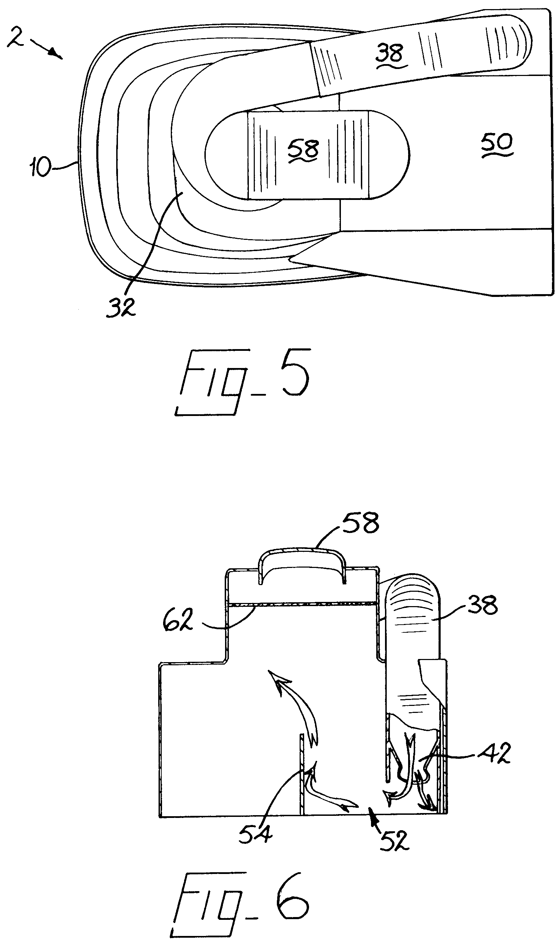

In an alternative embodiment of a lawn mower according to the invention, as shown in Figures 4 to 6 of the accompanying drawings, the chamber 30 comprises a further inlet 56, connected to one end of a further flexible pipe 58, the other end of which is connected to an outlet 60 in the top of the grass collection box 50. A filter 62 is fitted between the grass pick up area and the outlet 60.

In operation, the fan 28 not only produces a high velocity air steam at the outlet nozzle 42 of the flexible pipe 38, but also produces a suction effect, tending to suck the air through the filter 62 and thus increase the amount of grass collected in the grass box 50.

The output nozzle for the high velocity air stream may be angled to direct the air stream at any desired angle against the ground.

The grass box 50, together with associated pipe 38 and other ducting to direct the high velocity air stream and optional suction air stream, is preferably detachably mounted on the housing 6.

The grass collection box is provided, in known manner, with a hinged or otherwise opening portion for emptying of grass collected.

The mower illustrated will, of course, be provided with a handle and electrical connections but, for the sake of convenience, these are not shown.

## Claims

1. A lawn mower of the type which collects grass cuttings, characterised in that the lawn mower comprises means for directing a high velocity air stream towards the ground where there is debris to be collected, and duct or baffle means for deflecting said air stream into a grass collecting means.

2. A lawn mower according to claim 1, characterised in that it further comprises means for sucking up the air together with entrained grass cuttings.

3. A lawn mower according to claim 1 or claim 2, characterised in that the high velocity air stream is directed through an outlet nozzle.

4. A lawn mower according to any of claims 1 to 3, characterised in that it is a hover mower.

5. A lawn mower according to claim 4, characterised in that it is a hover mower, and the high velocity air stream towards the ground and the optional suction effect are produced by the fan which produces the air stream to form the hover air cushion.

6. A lawn mower according to claim 4, characterised in that it is a hover mower and the high velocity air stream towards the ground and the optional suction effect are produced by a second fan.

7. A lawn mower according to any of claims 1 to 3, characterised in that it is a wheeled rotary mower.

8. A lawn mower according to any of claims 1 to 7, in which the air is filtered before it is discharged to the atmosphere.

9. A lawn mower according to any of claims 2 to 8, in which the air is filtered before it passes through an inlet to the fan.

10. A lawn mower substantially as herein described.

11. A lawn mower substantially as herein described with reference to the accompanying drawings.

Fig-1

_Fig_ 2

_Fig_ 3

Fig_4

EP 0 511 766 A2

_Fig_ 5

_Fig_ 6

7